# EUROPÄISCHE PATENTANMELDUNG

(11) **EP 2 471 389 A2**
(43) Veröffentlichungstag der Anmeldung: **04.07.2012**
(21) Anmeldenummer: 12162448.0
(22) Anmeldetag: 24.06.2008
(51) Int. Cl.: A23L 1/31, A23L 1/317

(54) **Verfahren zur Herstellung von paniertem Formfleisch für die Zubereitung in einem Toaster, Formfleischprodukt und dessen Verwendung zur Zubereitung eines Schnitzels in einem Toaster**

(30) Priorität: 28.06.2007 DE 102007030104
(62) Teilanmeldung aus: 08104513.0
(71) Anmelder: Tillman's Convenience GmbH, 06667 Weißenfels (DE)
(72) Erfinder: Beermann, Carsten, 48231 Warendorf (DE)
(74) Vertreter: Cohausz & Florack

(57) **Zusammenfassung**

Die Erfindung betrifft ein tiefgekühltes Formfleischprodukt (1, 1', 1" , 1"') zur Zubereitung in einem herkömmlichen Toaster, gekennzeichnet durch ein aus Fleischstücken hergestelltes, paniertes und frittiertes Formfleischstück (2), das ein Scheibenformat aufweist, mit einer Panade (3) beschichtet ist, die aus einer aus zerkleinerten fleischlichen Rohstoffen, Trinkwasser und Hilfsstoffen erzeugten Nasspanade (3.1) und einer nachfolgend aufgebrachten Trockenpanade (3.2) gebildet ist, und einen Frittierfettgehalt von weniger als 12 Gew.-% aufweist.

## Beschreibung

Die Erfindung betrifft ein Verfahren zur Herstellung von paniertem Formfleisch für die Zubereitung in einem herkömmlichen Toaster, ein tiefgekühltes Formfleischprodukt zur Zubereitung in einem herkömmlichen Toaster und insbesondere die Verwendung eines tiefgekühlten Formfleischproduktes zur Zubereitung eines Schnitzels in einem herkömmlichen Toaster.

Allgemein bekannt sind tiefgekühlte, panierte Schinken-Schnitzel, die durch Erhitzen in einem Backofen oder einer Bratpfanne essfertig zubereitet werden können.

Der vorliegenden Erfindung liegt die Aufgabe zugrunde, ein Verfahren zur Herstellung von paniertem Formfleisch für eine Zubereitung in herkömmlichen Toastern anzugeben bzw. ein für die Zubereitung in einem herkömmlichen Toaster geeignetes Formfleischprodukt zur Verfügung zu stellen.

Diese Aufgabe wird zum einen durch das Verfahren mit den Merkmalen des Anspruchs 1 gelöst. Ferner wird diese Aufgabe durch ein tiefgekühltes Formfleischprodukt mit den Merkmalen des Anspruchs 11 gelöst.

Das erfindungsgemäße Verfahren umfasst im Wesentlichen folgende Schritte:
Formen von im Wesentlichen scheibenförmigen Formfleischstücken aus einer Fleischstücke, vorzugsweise Schinkenfleischstücke enthaltenden Formmasse, so dass das jeweilige Formfleischstück eine mittlere Dicke im Bereich von 5 mm bis 22 mm und eine Breite oder einen Durchmesser im Bereich von 50 mm bis 160 mm aufweist,
Nasspanieren der Formfleischstücke mit einer aus zerkleinerten fleischlichen Rohstoffen, Trinkwasser und Hilfsstoffen erzeugten Nasspanade, so dass das jeweilige Formfleischstück vollflächig oder im Wesentlichen vollflächig mit der Nasspanade versehen ist,
Trockenpanieren der nasspanierten Formfleischstücke, so dass das jeweilige nasspanierte Formfleischstück vollflächig mit einer Trockenpanade beschichtet ist,
Frittieren der trockenpanierten Formfleischstücke,
Abtrennen von überschüssigem Frittierfett von den frittierten Formfleischstücken, so dass die Formfleischstücke einen Frittierfettgehalt von weniger als 15 Gew.-%, vorzugsweise von weniger als 12 Gew.-% aufweisen, und
Tiefkühlen der frittierten und von überschüssigem Frittierfett befreiten Formfleischstücke.

Die so hergestellten Formfleischstücke (Formfleischprodukte) weisen einen erheblich reduzierten Frittierfettgehalt auf, so dass sie in herkömmlichen Toastern ohne problematische Fettverschmutzung des Toasters in relativ kurzer Garzeit, vorzugsweise ein Toasterintervall, essfertig zubereitet werden können. Die frittierten Formfleischstücke werden soweit von Frittierfett befreit, dass beim Erhitzen der Formfleischstücke im Toaster kein oder so gut wie kein Frittierfett in den Toaster tropft. Unter herkömmlichen Toastern werden in diesem Kontext allgemein im Handel erhältliche Toaster verstanden, die eine so genannte Krümmelschublade enthalten können, aber ansonsten keine speziellen Reinigungsfunktionen, wie etwa ohne Werkzeug herausnehmbare, abwaschbare Reflektorbleche aufweisen.

In einer bevorzugten Ausgestaltung des erfindungsgemäßen Verfahrens wird überschüssiges Frittierfett von den frittierten Formfleischstücken durch düsengesteuertes Abblasen mittels Luftströmung abgetrennt. Diese Art der Abtrennung von Frittierfett hat sich in Versuchen als sehr effektiv und zuverlässig erwiesen.

Eine weitere bevorzugte Ausgestaltung des erfindungsgemäßen Verfahrens sieht vor, dass vor dem Trockenpanieren überschüssige Nasspanade von den nasspanierten Formfleischstücken und/oder vor dem Frittieren überschüssige Trockenpanade von den panierten Formfleischstücken abgetrennt wird. Auf diese Weise wird erreicht, dass die Panade des zubereitungsfertigen Formfleischstückes besonders dünn ist und das Formfleischstück bzw. die Panade beim anschließenden Garungsprozess (Frittieren) keine Blasen an der Oberfläche bildet. Damit wird sichergestellt, dass das panierte und frittierte Formfleischstück an allen Stellen einen im Wesentlichen gleichmäßigen Durchmesser aufweist und ein Ablösen von Bestandteilen der Panade vom frittierten Formfleischstück praktisch völlig ausgeschlossen ist.

Die abgetrennte überschüssige Nasspanade und/oder Trockenpanade kann zum Panieren nachfolgender Formfleischstücke verwendet werden, so dass sich ein relativ geringer Verbrauch an Nasspanade bzw. Trockenpanade bei der Herstellung der panierten Formfleischstücke erzielen lässt.

Die Panade macht vorzugsweise weniger als 25 Gew.-%, insbesondere weniger als 20 Gew.-% des jeweiligen Formfleischstücks aus.

Auch das Abtrennen von überschüssiger Nasspanade und/oder überschüssiger Trockenpanade wird gemäß einer vorteilhaften Ausgestaltung des erfindungsgemäßen Verfahrens vorzugsweise durch Abblasen mittels Luftströmung durchgeführt.

Zur Erzielung von Formfleisch mit gutem Scheibenzusammenhalt sowie guter Schneidbarkeit ist ferner vorgesehen, dass die verwendeten Fleischstücke zerkleinert und vor dem Formen der Formfleischstücke getumbelt werden. Des Weiteren ist vorgesehen, dass die Fleischstücke während des Tumbelns gekühlt und anschließend mechanisch nachzerkleinert werden. Die Kühlung der Fleischstücke erfolgt vorzugsweise mittels CO₂-Gas. CO₂-Gas ist geruchs- und geschmacksneutral. Sodann werden aus den nachzerkleinerten Fleischstücken Formfleischstücke geformt, die vorzugsweise entsprechend einer Toastbrotscheibe ein im Wesentlichen rechteckiges oder quadratisches Scheibenformat aufweisen.

Weitere bevorzugte und vorteilhafte Ausgestaltungen des erfindungsgemäßen Verfahrens sind in den Unteransprüchen angegeben.

Nachfolgend wird die Erfindung unter Bezugnahme auf die beiliegende Zeichnung anhand von Ausführungsbeispielen näher erläutert. Es zeigen:

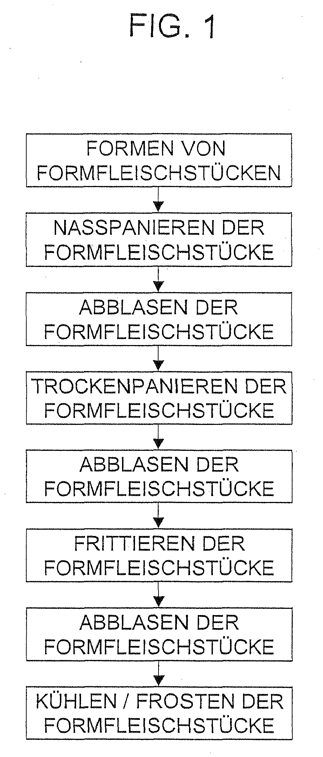

- Fig. 1: verschiedene Schritte des erfindungsgemäßen Verfahrens zur Herstellung eines Schnitzels aus Formfleisch für die Zubereitung in einem herkömmlichen Toaster;
- Fig. 2: verschiedene Schritte zur Herstellung einer Formmasse aus Fleischstücken für die Herstellung eines Schnitzels zur Zubereitung in einem herkömmlichen Toaster;
- Fig. 3: verschiedene Schritte zur Herstellung einer Nasspanade für ein Schnitzel aus Formfleisch zur Zubereitung in einem herkömmlichen Toaster;
- Fig. 4: ein einfindungsgemäßes Formfleischprodukt zur Zubereitung in einem herkömmlichen Toaster, in perspektivischer Ansicht;
- Fig. 5: eine Schnittansicht eines schematisch dargestellten, einfindungsgemäßen Formfleischproduktes;
- Figuren 6 und 7: weitere Ausführungsbeispiele von einfindungsgemäßen Formfleischprodukten, die unterschiedliche Formate aufweisen, in perspektivischer Ansicht; und
- Fig. 8: ein weiteres Ausführungsbeispiel eines einfindungsgemäßen Formfleischproduktes, in Draufsicht.

Die erfindungsgemäßen Formfleischprodukte, die man auch als Toasterschnitzel bezeichnen kann, können wie folgt hergestellt werden.

Zunächst wird eine Formmasse aus Schinkenfleisch hergestellt. Hierzu wird geeignetes Schinkenfleisch zerkleinert. Die Stückgrößen der zerkleinerten Schinkenfleischstücke liegen im Bereich von 2 mm bis 12 mm, vorzugsweise im Bereich von 4 mm bis 12 mm. Die zerkleinerten Schinkenfleischstücke werden dann in einem so genannten Tumbler unter Zugabe von Gewürzkomponenten veredelt. Durch das Tumbeln wird eine gleichmäßige, d.h. im Wesentlichen homogene Fleischmasse erzielt. Insbesondere wird durch das Tumbeln das Wasserbindungsvermögen der Fleischstücke verbessert. Durch diesen Prozess und die bevorzugte Maßnahme, dass bei der Herstellung des erfindungsgemäßen Formfleischprodukts keine Flüssiggewürze verwendet werden, ist im fertig gegarten Endprodukt kein Fremdwasseranteil nachweisbar.

Ferner werden die zerkleinerten Fleischstücke während des Tumbelns oder im Anschluss dran gekühlt. Die Kühlung erfolgt vorzugsweise im Tumbler mittels N₂-Gas, CO₂-Gas oder CO₂-Schnee auf eine Temperatur im Bereich von -1°C bis -5°C, beispielsweise ca. -3°C.

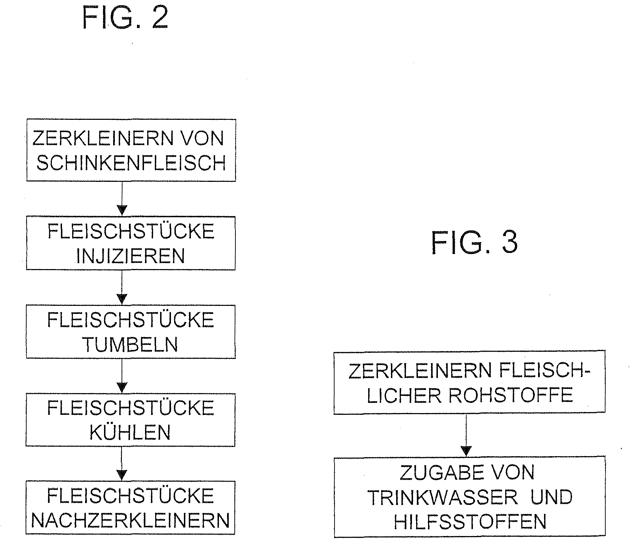

Anschließend werden die zerkleinerten, getumbelten und gekühlten Fleischstücke mechanisch nachzerkleinert. Die Nachzerkleinerung wird vorzugsweise mittels eines Kutters durchgeführt. Auf diese Weise wird eine Formmasse aus zusammengefügten Schinkenfleischstücken erhalten (vgl. Fig. 2).

Des Weiteren wird auf der Basis fleischlicher Rohstoffe eine Nasspanade hergestellt. Hierzu werden geeignete fleischliche Rohstoffe zerkleinert. Die fleischlichen Rohstoffe werden soweit zerkleinert werden, dass sie in flüssiger Konsistenz in der Nasspanade vorliegen. Die Nasspanade basiert auf tierischem Eiweiß und ist im Wesentlichen stärkefrei. Während der Zerkleinerung der fleischlichen Rohstoffe und/oder im Anschluss daran werden Trinkwasser und Hilfsstoffe zugegeben. Als Hilfsstoffe für die Herstellung der Nasspanade werden vorzugsweise Kochsalz, Laktat und/oder Phosphat verwendet (vgl. Fig. 3).

Aus einer Schinkenfleischstücke enthaltenden Formmasse, die gemäß den in Fig. 2 angegebenen Verfahrensschritten hergestellt werden kann, werden unter Verwendung eines Formwerkzeuges scheibenförmige Formfleischstücke geformt. Die scheibenförmigen Formfleischstücke werden so geformt, dass das jeweilige Formfleischstück eine mittlere Dicke im Bereich von 5 mm bis 22 mm und eine Breite oder einen Durchmesser im Bereich von 50 mm bis 160 mm aufweist.

Die scheibenförmigen Formfleischstücke werden zunächst mit einer Nasspanade, die wie oben mit Bezug auf Fig. 3 beschrieben hergestellt werden kann, paniert und anschließend trockenpaniert. Das jeweilige Formfleischstück wird dabei vollflächig oder im Wesentlichen vollflächig mit der Nasspanade versehen.

Vor dem Trockenpanieren wird überschüssige Nasspanade von den Formfleischstücken abgetrennt. Die Abtrennung von überschüssiger Nasspanade erfolgt vorzugsweise durch Abblasen der nasspanierten Formfleischstücke. Nach dem Abtrennen von überschüssiger Nasspanade wird das jeweilige Formfleischstück mit einer Trockenpanade beschichtet, die auf einer Weizenmehlbasis basiert. Zudem enthält die Trockenpanade vorzugsweise Salz, Hefe und/oder andere Gewürze. Die Trockenpanade wird so aufgebracht, dass das jeweilige nasspanierte Formfleischstück vollflächig mit der Trockenpanade beschichtet ist.

Nach der Beschichtung mit Trockenpanade werden die Formfleischstücke frittiert. Vor dem Frittieren werden die Formfleischstücke allerdings nochmals abgeblasen, um überschüssige Trockenpanade abzutrennen.

Die frittierten Formfleischstücke werden anschließend einer Abblasvorrichtung zugeführt, in der mittels Druckluft überschüssiges Frittierfett von den Formfleischstücke abgeblasen wird. Die Abblasvorrichtung weist hierzu mehrere Flachdüsen auf, die überschüssiges Frittierfett schonend von den Panade abtrennen.

Durch das Abblasen wird erreicht, dass der Frittierfettgehalt der zubereitungsfertigen Toaster-Schnitzel weniger als 15 Gew.-%, vorzugsweise weniger als 12 Gew.-% beträgt.

Nach einer besonders bevorzugten Ausgestaltung des erfindungsgemäßen Verfahren ist vorgesehen, dass die Fleischstücke für die Formmasse so ausgewählt und die Nass- und/oder die Trockenpanade so zubereitet werden, dass die frittierten und von überschüssigem Frittierfett befreiten Formfleischstücke einen Fettgehalt von weniger als 11 Gew.-% aufweisen.

Schließlich werden die frittierten und von überschüssigem Frittierfett befreiten Formfleischstücke tiefgekühlt oder gefrostet und verpackt.

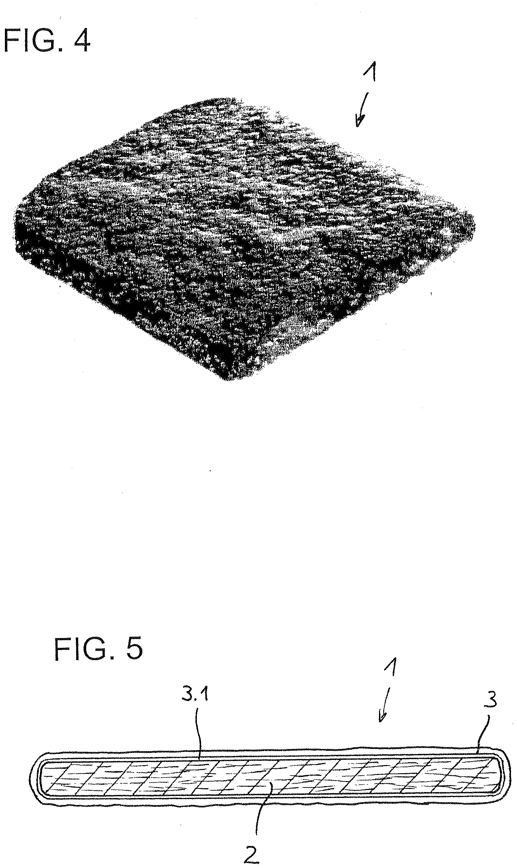

Fig. 5 zeigt eine Schnittansicht eines einfindungsgemäßen Formfleischproduktes 1. Mit 2 ist das aus Schinkenfleischstücken hergestellte Formfleischstück bezeichnet, das ein im Wesentlichen rechteckiges, quadratisches oder polygonales Scheibenformat mit einer mittleren Dicke im Bereich von 8 mm bis 22 mm und einer Breite oder einem Durchmesser im Bereich von 50 mm bis 160 mm aufweist. Das Formfleischstück 2 ist vollflächig mit einer mehrschichtigen Panade 3 umhüllt. Die erste unmittelbar auf das Formfleischstück 2 aufgebrachte Schicht 3.1 ist aus einer aus zerkleinerten fleischlichen Rohstoffen, Trinkwasser und Hilfsstoffen erzeugten Nasspanade gebildet. Darauf ist als zweite Schicht 3.2 eine Trockenpanade aufgebracht, die - wie bereits erwähnt - auf einer Weizenmehlbasis basiert und ergänzend Salz, Hefe und/oder mindestens ein Gewürz enthalten kann. Die Nasspanade ist frei von Aromastoffen, Extrakten und Geschmacksverstärkern. Sie enthält weder Stärke- noch Mehlkomponenten.

Die Schichtdicke der zweischichtigen Panade 3 liegt im Bereich von 2 mm bis 6 mm.

Da die fleischlichen Rohstoffe für die Nasspanade 3.1 soweit zerkleinert wurden, dass sie in flüssiger Konsistenz in der Nasspanade vorliegen, und die Nasspanade 3.1 im Wesentlichen stärkefrei ist, besitzt das frittierte, zubereitungsfertige Formfleischprodukt 1 im Ergebnis eine Panade 3 mit besonders gleichmäßiger Schichtdicke auf, die blasenfrei oder im Wesentlichen blasenfrei mit zuverlässiger Anbindung an dem Formfleischstück 2 haftet. Hierdurch wird sichergestellt, dass es beim Zubereiten des erfindungsgemäßen Formfleischprodukts 1 in einem herkömmlichen Toaster im Wesentlichen zu keiner Ablösung der Panade 3 vom Formfleischstück 2 kommt bzw. eine kritische Blasenbildung zwischen Panade 3 und dem Formfleischstück 2 verhindert wird.

Die erfindungsgemäßen Formfleischprodukte 1 enthalten weder künstliche Konservierungsstoffe noch Farbstoffe noch künstliche Geschmacksverstärker.

Die zubereitungsfertigen Formfleischstücke 2 haben durch die Panade 3 eine goldbraune Farbe. Wie oben erwähnt, werden aus der Schinkenfleisch-Formmasse im Wesentlichen rechteckige, scheibenförmige Formfleischstücke 2 zur Zubereitung in herkömmlichen Toastern geformt. Die Formate der erfindungsgemäßen panierten Formfleischprodukte können beispielsweise ca. 8 x 8 cm, 9 x 9 cm, 10 x 10 cm, 11 x 11 cm oder 9 x 11,5 cm betragen. Die Ecken der scheibenförmige Formfleischstücke sind dabei vorzugsweise etwas abgerundet, wobei zwei benachbarte Ecken stärker abgerundet sind als die beiden übrigen Ecken. Das in Fig. 4 dargestellte erfindungsgemäße Formfleischprodukt 1 besitzt im Wesentlichen das Format einer klassischen Toastbrotscheibe. Seine mittlere Dicke liegt im Bereich von ca. 10 mm bis 22 mm.

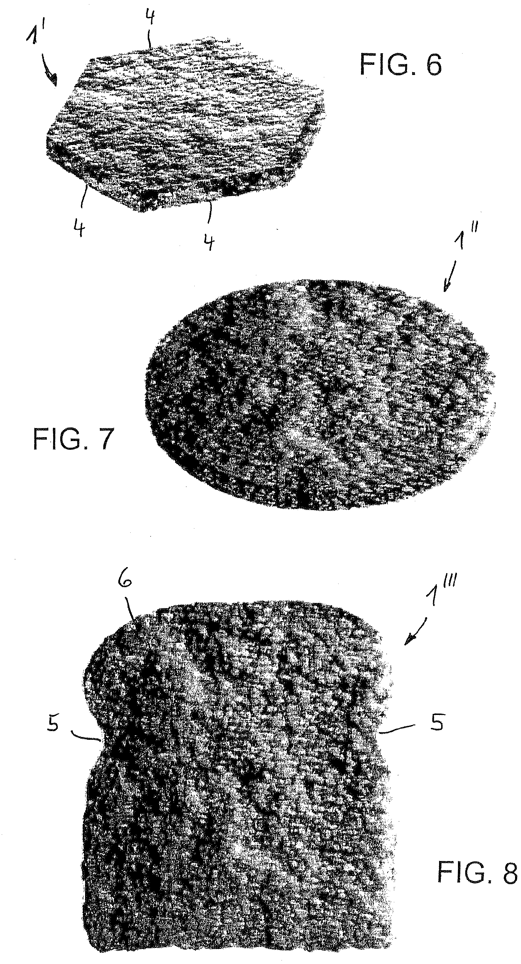

In den Figuren 6 bis 8 sind weitere bevorzugte Formate des erfindungsgemäßen Formfleischproduktes dargestellt. Das panierte, durchgegarte Formfleischprodukt 1' gemäß Fig. 6 ist polygonal ausgebildet; es besitzt sechs Ecken, wobei die die jeweilige Ecke definierenden, im Wesentlichen gleichlangen Schmalseiten 4 jeweils einen Winkel von ca. 120° bzw. 240° einschließen. Die mittlere Dicke des panierten Formfleischproduktes 1' liegt im Bereich von ca. 10 mm bis 22 mm. Der Abstand der im Wesentlichen parallel zu einander verlaufenden Schmalseiten 4 liegt im Bereich von ca. 50 mm bis 120 mm.

Anstelle eines sechseckigen Formats gemäß Fig. 6 kann das erfindungsgemäße Formfleischproduktes optional auch ein achteckiges Format aufweisen.

Das panierte, durchgegarte Formfleischprodukt 1" gemäß Fig. 7 ist im Wesentlichen kreisrund ausgebildet; sein Durchmesser liegt im Bereich von 50 mm bis 160 mm, vorzugsweise im Bereich von 100 mm bis 120 mm.

Das panierte, durchgegarte Formfleischprodukt 1"' gemäß Fig. 8 weist im Wesentlichen die Form einer klassischen Zwiebackscheibe auf. Es hat dementsprechend zwei gegenüberliegende Einbuchtungen 5 und einen bogenförmig, abgerundeten Kopfabschnitt 6. Seine Breite bzw. Höhe liegt im Bereich von 90 mm bis 160 mm; uns seine mittlere Dicke beträgt ebenfalls ca. 10 mm bis 22 mm.

Zur Zubereitung wird das erfindungsgemäße Formfleischprodukt (Schnitzel) im noch tiefgekühlten Zustand in einen herkömmlichen Toaster eingelegt bzw. gesteckt und mit maximaler Toasterheizleistung erhitzt. Die Garzeit beträgt ca. 2 x 3 Minuten. Zur Zubereitung erfindungsgemäßer Formfleischprodukte kann anstelle eines herkömmlichen Toasters gegebenenfalls auch ein aufklappbarer Sandwichtoaster genutzt werden.

Die Erfindung betrifft ferner die Gegenstände der folgenden Klauseln:
Klausel 1: Verfahren zur Herstellung von paniertem Formfleisch für die Zubereitung in einem herkömmlichen Toaster, gekennzeichnet durch folgende Schritte:
   Formen von im Wesentlichen scheibenförmigen Formfleischstücken 2 aus einer Fleischstücke, vorzugsweise Schinkenfleischstücke enthaltenden Formmasse, so dass das jeweilige Formfleischstück 2 eine mittlere Dicke im Bereich von 5 mm bis 22 mm und eine Breite oder einen Durchmesser im Bereich von 50 mm bis 160 mm aufweist,
   Nasspanieren der Formfleischstücke 2 mit einer aus zerkleinerten fleischlichen Rohstoffen, Trinkwasser und Hilfsstoffen erzeugten Nasspanade 3.1, so dass das jeweilige Formfleischstück vollflächig oder im Wesentlichen vollflächig mit der Nasspanade versehen ist,
   Trockenpanieren der nasspanierten Formfleischstücke, so dass das jeweilige nasspanierte Formfleischstück 2 vollflächig mit einer Trockenpanade 3.2 beschichtet ist,
   Frittieren der trockenpanierten Formfleischstücke,
   Abtrennen von überschüssigem Frittierfett von den frittierten Formfleischstücken, so dass die Formfleischstücke einen Frittierfettgehalt von weniger als 15 Gew.-%, vorzugsweise von weniger als 12 Gew.-% aufweisen, und
   Tiefkühlen der frittierten und von überschüssigem Frittierfett befreiten Formfleischstücke 2.
Klausel 2: Verfahren nach Klausel 1,
   dadurch gekennzeichnet, dass vor dem Trockenpanieren überschüssige Nasspanade 3.1 von den nasspanierten Formfleischstücken 2 durch Abblasen mittels Luftströmung abgetrennt wird.
Klausel 3: Verfahren nach Klausel 1 oder 2,
   dadurch gekennzeichnet, dass vor dem Frittieren überschüssige Trockenpanade 3.2 von den trockenpanierten Formfleischstücken durch Abblasen mittels Luftströmung abgetrennt wird.
Klausel 4: Verfahren nach einer der Klauseln 1 bis 3, dadurch gekennzeichnet, dass zur Herstellung der Nasspanade 3.1 Kochsalz, Laktat und/oder Phospat als Hilfsstoffe verwendet werden.
Klausel 5: Verfahren nach einer der Klauseln 1 bis 4,
   dadurch gekennzeichnet, dass die Fleischstücke vor dem Formen der Formfleischstücke 2 getumbelt werden.
Klausel 6: Verfahren nach Klausel 5,
   dadurch gekennzeichnet, dass die Fleischstücke während des Tumbelns gekühlt werden.
Klausel 7: Verfahren nach Klausel 5 oder 6,
   dadurch gekennzeichnet, dass die Fleischstücke nach dem Tumbeln und vor dem Formen der Formfleischstücke 2 mechanisch nachzerkleinert werden.
Klausel 8: Verfahren nach einer der Klauseln 1 bis 7,
   dadurch gekennzeichnet, dass die fleischlichen Rohstoffe für die Nasspanade 3.1 soweit zerkleinert werden, dass sie in flüssiger Konsistenz in der Nasspanade vorliegen.
Klausel 9: Verfahren nach einer der Klauseln 1 bis 8,
   dadurch gekennzeichnet, dass die Fleischstücke für die Formmasse so ausgewählt und die Nass- 3.1 und/oder die Trockenpanade 3.2 so zubereitet werden, dass die frittierten und von überschüssigem Frittierfett befreiten Formfleischstücke 2 einen Fettgehalt von weniger als 11 Gew.-% aufweisen.
Klausel 10: Verfahren nach einer der Klauseln 1 bis 9,
   dadurch gekennzeichnet, dass die Nasspanade 3.1 auf tierischem Eiweiß basiert und im Wesentlichen stärkefrei ist.
Klausel 11: Tiefgekühltes Formfleischprodukt (1, 1', 1", 1"') zur Zubereitung in einem herkömmlichen Toaster, gekennzeichnet durch ein aus Schinkenfleischstücken hergestelltes, paniertes und frittiertes Formfleischstück 2, das ein im Wesentlichen rechteckiges, quadratisches oder polygonales Scheibenformat mit einer mittleren Dicke im Bereich von 8 mm bis 22 mm und einer Breite oder einem Durchmesser im Bereich von 50 mm bis 160 mm aufweist, vollflächig mit einer Panade (3) beschichtet ist, die aus einer aus zerkleinerten fleischlichen Rohstoffen, Trinkwasser und Hilfsstoffen erzeugten Nasspanade 3.1 und einer nachfolgend aufgebrachten Trockenpanade 3.2 gebildet ist, und einen Frittierfettgehalt von weniger als 15 Gew.-%, vorzugsweise weniger als 12 Gew.-% aufweist.
Klausel 12: Tiefgekühltes Formfleischprodukt nach Klausel 11, dadurch gekennzeichnet, dass die Panade 3 weniger als 25 Gew.-%, vorzugsweise weniger als 20 Gew.-% des Formfleischstücks ausmacht.
Klausel 13: Tiefgekühltes Formfleischprodukt nach Klausel 11 oder 12, dadurch gekennzeichnet, dass die Nasspanade 3.1 auf tierischem Eiweiß basiert und im Wesentlichen stärkefrei ist.
Klausel 14: Tiefgekühltes Formfleischprodukt nach einer der Klauseln 11 bis 13, dadurch gekennzeichnet, dass die Panade 3 eine Schichtdicke im Bereich von 2 mm bis 6 mm aufweist.
Klausel 15: Verwendung eines tiefgekühlten Formfleischproduktes (1, 1', 1", 1"') bestehend aus einem aus Schinkenfleischstücken hergestellten, panierten und frittierten Formfleischstück 2, das ein im Wesentlichen rechteckiges, quadratisches oder polygonales Scheibenformat mit einer mittleren Dicke im Bereich von 8 mm bis 25 mm und einer Breite oder einem Durchmesser im Bereich von 50 mm bis 160 mm aufweist, vollflächig mit einer Panade 3 beschichtet ist, die aus einer aus zerkleinerten fleischlichen Rohstoffen, Trinkwasser und Hilfsstoffen erzeugten Nasspanade 3.1 und einer nachfolgend aufgebrachten Trockenpanade 3.2 gebildet ist, und einen reduzierten Frittierfettgehalt von weniger als 15 Gew.-%, vorzugsweise weniger als 12 Gew.-% aufweist, zur Zubereitung eines Schnitzels in einem herkömmlichen Toaster.

## Patentansprüche

1. Tiefgekühltes Formfleischprodukt (1, 1', 1", 1"') zur Zubereitung in einem herkömmlichen Toaster, **gekennzeichnet durch** ein aus Fleischstücken hergestelltes, paniertes und frittiertes Formfleischstück (2), das ein Scheibenformat aufweist, mit einer Panade (3) beschichtet ist, die aus einer aus zerkleinerten fleischlichen Rohstoffen, Trinkwasser und Hilfsstoffen erzeugten Nasspanade (3.1) und einer nachfolgend aufgebrachten Trockenpanade (3.2) gebildet ist, und einen Frittierfettgehalt von weniger als 12 Gew.-% aufweist.

2. Tiefgekühltes Formfleischprodukt nach Anspruch 1, **dadurch gekennzeichnet, dass** die Panade (3) weniger als 25 Gew.-%, vorzugsweise weniger als 20 Gew.-% des Formfleischstücks ausmacht.

3. Tiefgekühltes Formfleischprodukt nach Anspruch 1 oder 2, **dadurch gekennzeichnet, dass** die Nasspanade (3.1) auf tierischem Eiweiß basiert und im Wesentlichen stärkefrei ist.

4. Tiefgekühltes Formfleischprodukt nach einem der Ansprüche 1 bis 3, **dadurch gekennzeichnet, dass** die Panade (3) eine Schichtdicke im Bereich von 2 mm bis 6 mm aufweist.

5. Verwendung eines tiefgekühlten Formfleischproduktes (1, 1', 1", 1"') bestehend aus einem aus Fleischstücken hergestellten, panierten und frittierten Formfleischstück (2), das ein Scheibenformat aufweist, mit einer Panade (3) beschichtet ist, die aus einer aus zerkleinerten fleischlichen Rohstoffen, Trinkwasser und Hilfsstoffen erzeugten Nasspanade (3.1) und einer nachfolgend aufgebrachten Trockenpanade (3.2) gebildet ist, und einen reduzierten Frittierfettgehalt von weniger als 12 Gew.-% aufweist, zur Zubereitung eines panierten, frittierten Formfleischstückes durch Erhitzen in einem herkömmlichen Toaster.
